(19) Europäisches Patentamt / European Patent Office / Office européen des brevets

(11) **EP 4 426 012 A1**

(12) **EUROPEAN PATENT APPLICATION**
published in accordance with Art. 153(4) EPC

(43) Date of publication:
**04.09.2024 Bulletin 2024/36**

(21) Application number: **22911745.2**

(22) Date of filing: **13.12.2022**

(51) International Patent Classification (IPC):
**H04W 36/00** (2009.01)  **H04W 24/10** (2009.01)
**H04W 84/06** (2009.01)

(52) Cooperative Patent Classification (CPC):
**H04W 24/10; H04W 36/00; H04W 84/06**

(86) International application number:
**PCT/KR2022/020247**

(87) International publication number:
**WO 2023/121112 (29.06.2023 Gazette 2023/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.12.2021 KR 20210184974**

(71) Applicant: **Samsung Electronics Co., Ltd.**
**Suwon-si, Gyeonggi-do 16677 (KR)**

(72) Inventors:
• **KIM, Sangbum**
**Suwon-si, Gyeonggi-do 16677 (KR)**
• **JUNG, Sangyeob**
**Suwon-si, Gyeonggi-do 16677 (KR)**
• **BAEK, Sangkyu**
**Suwon-si, Gyeonggi-do 16677 (KR)**

(74) Representative: **Gulde & Partner**
**Patent- und Rechtsanwaltskanzlei mbB**
**Wallstraße 58/59**
**10179 Berlin (DE)**

(54) **METHOD AND APPARATUS FOR SUPPORTING AERIAL UE IN NEXT GENERATION MOBILE COMMUNICATION**

(57) The present disclosure relates to a 5G or 6G communication system for supporting a higher data transmission rate. A method and an apparatus for supporting an aerial UE can be provided according to various embodiments of the present disclosure.

FIG. 4

EP 4 426 012 A1

**Description**

**[Technical Field]**

The disclosure relates to a terminal and base station operation in a communication system. More specifically, the disclosure relates to a method and device for supporting an AERIAL UE.

**[Background Art]**

5G mobile communication technology defines a wide frequency band to enable a fast transmission speed and new services, and may be implemented not only in a frequency ('sub 6 GHz') band of 6 GHz or less such as 3.5 GHz, but also in an ultra high frequency band ('above 6 GHz') called a mmWave such as 28 GHz and 39 GHz. Further, in the case of 6G mobile communication technology, which is referred to as a beyond 5G system, in order to achieve a transmission speed that is 50 times faster than that of 5G mobile communication technology and ultra-low latency reduced to 1/10 compared to that of 5G mobile communication technology, implementations in terahertz bands (e.g., such as 95 GHz to 3 terahertz (3 THz) band) are being considered.

In the early days of 5G mobile communication technology, with the goal of satisfying the service support and performance requirements for an enhanced mobile broadband (eMBB), ultra-reliable low-latency communications (URLLC), and massive machine-type communications (mMTC), standardization has been carried out for beamforming and massive multi-input multi-output (MIMO) for mitigating a path loss of radio waves in an ultra-high frequency band and increasing a propagation distance of radio waves, support for various numerologies (multiple subcarrier spacing operation, and the like) for efficient use of ultra-high frequency resources and dynamic operation for slot formats, initial access technology for supporting multi-beam transmission and broadband, a definition and operation of a band-width part (BWP), a new channel coding method such as low density parity check (LDPC) code for large capacity data transmission and polar code for high reliable transmission of control information, L2 pre-processing, and network slicing that provides a dedicated network specialized for specific services.

Currently, discussions are ongoing to improve initial 5G mobile communication technology and enhance a performance thereof in consideration of services in which 5G mobile communication technology was intended to support, and physical layer standardization for technologies such as vehicle-to-everything (V2X) for helping driving determination of an autonomous vehicle and increasing user convenience based on a location and status information of the vehicle transmitted by the vehicle, new radio unlicensed (NR-U) for the purpose of a system operation that meets various regulatory requirements in unlicensed bands, NR UE power saving, a non-terrestrial network (NTN), which is direct UE-satellite communication for securing coverage in regions where communication with a terrestrial network is impossible, and positioning is in progress.

Further, standardization in the field of air interface architecture/protocol for technologies such as industrial Internet of things (IIoT) for supporting new services through linkage and convergence with other industries, integrated access and backhaul (IAB) that provides nodes for expanding network service regions by integrating wireless backhaul links and access links, mobility enhancement including conditional handover and dual active protocol stack (DAPS) handover, and 2-step RACH for NR that simplifies a random access procedure is also in progress, and standardization in the field of system architecture/service for 5G baseline architecture (e.g., service based architecture, service based interface) for applying network functions virtualization (NFV) and software-defined networking (SDN) technologies, mobile edge computing (MEC) that receives services based on a location of a UE, and the like is also in progress.

When such a 5G mobile communication system is commercialized, connected devices in an explosive increase trend will be connected to communication networks; thus, it is expected that function and performance enhancement of a 5G mobile communication system and integrated operation of connected devices will be required. To this end, new research on eXtended reality (XR) for efficiently supporting augmented reality (AR), virtual reality (VR), mixed reality (MR), and the like, 5G performance improvement and complexity reduction using artificial intelligence (AI) and machine learning (ML), AI service support, metaverse service support, and drone communication will be conducted.

Further, the development of such a 5G mobile communication system will be the basis for the development of full duplex technology for improving frequency efficiency and system network of 6G mobile communication technology, satellite, AI-based communication technology that utilizes artificial intelligence (AI) from a design stage and that realizes system optimization by internalizing end-to-end AI support functions, and next generation distributed computing technology that realizes complex services beyond the limits of UE computing capabilities by utilizing ultra-high-performance communication and computing resources as well as a new waveform for ensuring coverage in a terahertz band of 6G mobile communication technology, full dimensional MIMO (FD-MIMO), multi-antenna transmission technologies such as an array antenna and large scale antenna, metamaterial-based lenses and antennas for improving coverage of terahertz band signals, high-dimensional spatial multiplexing technology using orbital angular momentum (OAM), and reconfigurable intelligent surface (RIS) technology.

**[Disclosure of Invention]**

**[Technical Problem]**

The disclosure relates to a method and device for effectively supporting an aerial UE in a communication system. According to various embodiments of the disclosure, a method and device for performing condition-based handover, new event-triggered measurement, and access control for an aerial UE are provided.

Technical problems to be achieved in the disclosure are not limited to the above-described technical problems, and other technical problems not described will be clearly understood by those of ordinary skill in the art to which the disclosure belongs from the description below.

**[Solution to Problem]**

According to an embodiment of the disclosure for solving the above problems, a method performed by an aerial terminal performing conditional handover in a wireless communication system includes receiving, from a base station, a first radio resource control (RRC) message including condition information for performing the conditional handover of the aerial terminal; determining whether there is a cell satisfying conditions based on the first RRC message; and performing, in the case that there is a cell satisfying the above conditions, handover to the cell, wherein the condition information is determined based on at least one of a location, height, or speed of the aerial terminal.

According to an embodiment of the disclosure for solving the above problems, a method performed by a base station supporting conditional handover in a wireless communication system includes receiving measurement results from an aerial terminal; determining condition information for performing conditional handover based on the measurement results; and transmitting a first radio resource control (RRC) message including the condition information, wherein the condition information is determined based on at least one of a location, height, and speed of the aerial terminal.

According to an embodiment of the disclosure for solving the above problems, an aerial terminal for performing conditional handover in a wireless communication system includes a transceiver configured to transmit and receive signals; and a controller, wherein the controller is configured to control to receive a first radio resource control (RRC) message including condition information for performing the conditional handover of the aerial terminal from a base station, to evaluate a cell satisfying conditions based on the first RRC message, and to evaluate whether there is a cell satisfying the above conditions, and the condition information is determined based on at least one of a location, height, or speed of the aerial terminal.

According to an embodiment of the disclosure for solving the above problems, an aerial terminal for performing conditional handover in a wireless communication system includes a transceiver configured to transmit and receive signals; and a controller, wherein the controller is configured to control to receive a first radio resource control (RRC) message including condition information for performing the conditional handover of the aerial terminal from a base station, to determine whether there is a cell satisfying conditions based on the first RRC message, and to execute handover to the cell in the case that there is a cell satisfying the above conditions, and the condition information is determined based on at least one of a location, height, or speed of the aerial terminal.

**[Advantageous Effects of Invention]**

According to various embodiments of the disclosure, a method and device for executing condition-based handover, new event-triggered measurement, and access control for an aerial UE are provided. Accordingly, the aerial UE can be effectively supported in a communication system.

Effects that may be obtained from the disclosure are not limited to the effects described above, and other effects not described will be clearly understood by those skilled in the art to which the disclosure belongs from the description below.

**[Brief Description of Drawings]**

FIG. 1 is a diagram illustrating a structure of a next generation mobile communication system (new radio) according to an embodiment of the disclosure.

FIG. 2 is a diagram illustrating functions for an aerial UE in a mobile communication system according to an embodiment of the disclosure.

FIG. 3 is a message flow diagram illustrating a process of performing a condition-based handover operation in a mobile communication system according to an embodiment of the disclosure.

FIG. 4 is a message flow diagram illustrating a process of performing condition-based handover for an aerial UE in a new radio according to an embodiment of the disclosure.

FIG. 5 is a flowchart illustrating a UE operation of performing condition-based handover for an aerial UE in a new radio according to an embodiment of the disclosure.

FIG. 6 is a flowchart illustrating a base station operation of executing condition-based handover for an aerial UE in a new radio according to an embodiment of the disclosure.

FIG. 7 is a message flow diagram illustrating a process of performing event-triggered cell measurement for an aerial UE in a new radio according to an embodiment of the disclosure.

FIG. 8 is a flowchart illustrating a terminal operation of performing event-triggered cell measurement for an aerial UE in a new radio according to an embodiment of the disclosure.

FIG. 9 is a message flow diagram illustrating a process of performing an access control operation for an aerial UE in a new radio according to an embodiment of the disclosure.

FIG. 10 is a flowchart illustrating a terminal NAS operation of performing an access control operation for an aerial UE in a new radio according to an embodiment of the disclosure.

FIG. 11 is a flowchart illustrating a terminal AS operation of performing an access control operation for an aerial UE in a new radio according to an embodiment of the disclosure.

FIG. 12 is a block diagram illustrating an internal structure of a terminal according to an embodiment of the disclosure.

FIG. 13 is a block diagram illustrating a constitution of a base station according to an embodiment of the disclosure.

## [Mode for the Invention]

In the following description, in describing the disclosure, in the case that it is determined that a detailed description of a related well-known function or constitution may unnecessarily obscure the gist of the disclosure, a detailed description thereof will be omitted. Hereinafter, an embodiment of the disclosure will be described with reference to the accompanying drawings.

Terms used in this specification are used only for describing specific embodiments, and may not be intended to limit the scope of other embodiments. In describing embodiments of this specification, descriptions of technical contents that are well known in the technical field to which the disclosure pertains and that are not directly related to the disclosure will be omitted. This is to more clearly convey the gist of the disclosure without obscuring the gist of the disclosure by omitting unnecessary description. The singular expression may include the plural expression unless the context clearly dictates otherwise. Terms used herein, including technical or scientific terms, may have the same meanings as those commonly understood by one of ordinary skill in the art described in the disclosure. Among terms used in the disclosure, terms defined in a general dictionary may be interpreted with the same or similar meaning as the meaning in the context of the related art, and unless explicitly defined in the disclosure, it is not interpreted in an ideal or overly formal sense. In some cases, even terms defined in the disclosure cannot be interpreted to exclude embodiments of the disclosure.

In various embodiments of the disclosure described below, a hardware approach method will be described as an example. However, because various embodiments of the disclosure include technology using both hardware and software, various embodiments of the disclosure do not exclude a software-based approach.

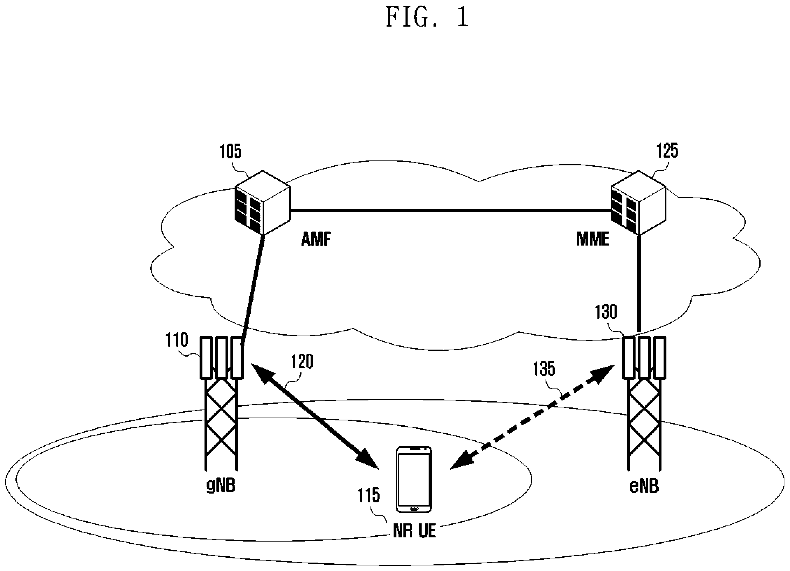

FIG. 1 is a diagram illustrating a structure of a next generation mobile communication system (new radio) according to an embodiment of the disclosure.

With reference to FIG. 1, as illustrated, a radio access network of the new radio (NR) includes a new radio node B (hereinafter, gNB) 110 and an access and mobility management function (AMF) (new radio core network) 105. A new radio user equipment (hereinafter, referred to as NR UE, terminal, or UE) 115 accesses to an external network through the gNB 110 and the AMF 105.

In FIG. 1, the gNB 110 corresponds to an evolved node B (eNB) 130 of the existing LTE system. The gNB 110 is connected to the NR UE 115 through a wireless channel and may provide a service superior to that of the existing node B (120). In the new radio, because all user traffic is serviced through a shared channel, a device that collects status information such as a buffer status, available transmission power status, and channel status of UEs 115 and that performs scheduling is required, and the gNB 110 is responsible for this. One gNB 110 typically controls multiple cells. The new radio may have the existing maximum bandwidth or more in order to implement ultra-high-speed data transmission compared to existing LTE, and additional beamforming technology may be incorporated using orthogonal frequency division multiplexing (hereinafter, referred to as OFDM) as a wireless access technology. Further, the new radio applies an adaptive modulation & coding (AMC) method that determines a modulation scheme and channel coding rate according to a channel status of the UE. The AMF 105 performs functions such as mobility support, bearer configuration, and QoS configuration. The AMF 105 is a device that performs various control functions as well as mobility management functions for the UE 115 and is connected to a plurality of base stations 110. Further, the new radio may be linked to the existing LTE system, and the AMF 105 is connected to a mobility management entity (MME) 125 through a network interface. The MME 125 is connected to the eNB 130, which is the existing base station. The UE 115 supporting LTE-NR dual connectivity may transmit and receive data while maintaining connection to not only the gNB 110 but also the eNB 130 (135).

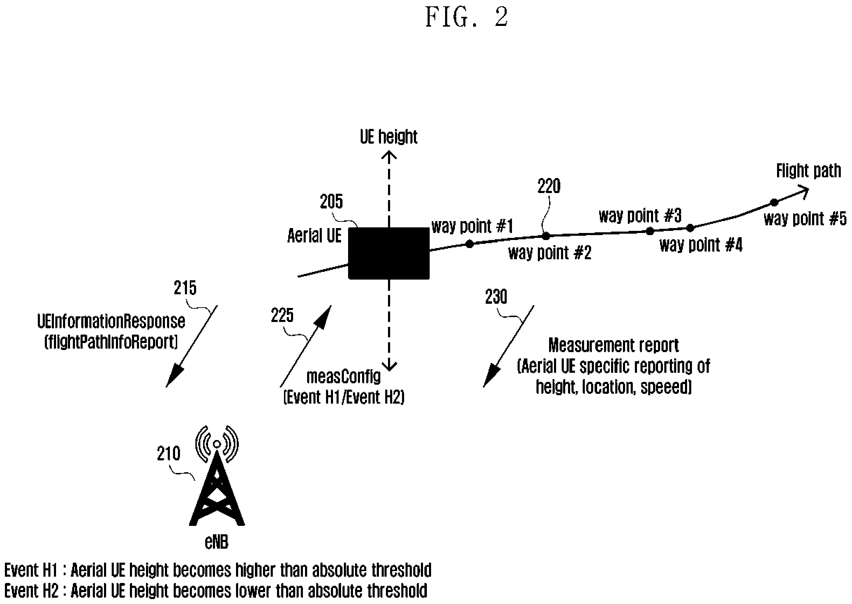

FIG. 2 is a diagram illustrating functions for an aerial UE in a mobile communication system according to an embodiment of the disclosure.

With reference to FIG. 2, an LTE mobile communication system may be used as a communication means for aerial vehicles such as an uncrewed/unmaned aerial vehicle (UAV) and uncrewed/unmaned aerial mobility (UAM). To this end, assuming an aerial UE 205, aerial UE-specific enhancement was performed in the LTE mobile communication system.

There is a use case that a UAV/UAM moves along a predetermined flight path. Therefore, when a base station 210 knows the determined path, the information may be used for supporting mobility (e.g., handover) of the aerial UE 205. To this end, the aerial UE 205 may notify the base station 210 that it has the flight path information using predetermined RRC messages, for example, RRCConnectionSetupComplete, RRCConnectionResumeComplete, RRCConnectionReestablishmentComplete, and RRCConnectionReconfigurationComplete. The base station 210 may request the flight path information to the aerial UE 205 through a UEInformationRequest message, and the aerial UE 205 that has received the request may report the flight path information (IE FlightPathInfoReport) through a UEInformationResponse message (215). The flight path information may be composed of way points 220 that the aerial UE 205 should pass through and expected time information when passing each way point.

The base station 210 may configure aerial UE-specific event-triggered measurement to the aerial UE 205 (225). The aerial UE 205 may experience different channel environments according to a height at which it is located. Therefore, cell measurement information collected at a specific height may be usefully used for supporting the mobility of the aerial UE 205. Therefore, the following two events are defined in the LTE mobile communication system.

Event H1: Aerial UE height becomes higher than absolute threshold
Event H2: Aerial UE height becomes lower than absolute threshold

That is, if a height of the UE is higher or lower than a specifically configured threshold, the aerial UE 205 performs a cell measurement information reporting operation of reporting valid cell measurement information to the base station 210 (230).

Further, information reported by the aerial UE 205 to the base station 210 may additionally include aerial UE-specific information, such as height information of the aerial UE 205.

In the disclosure, in a new radio, in order to effectively support the aerial UE 205, condition-based handover, new event-triggered measurement, and access control method for the aerial UE 205 is proposed.

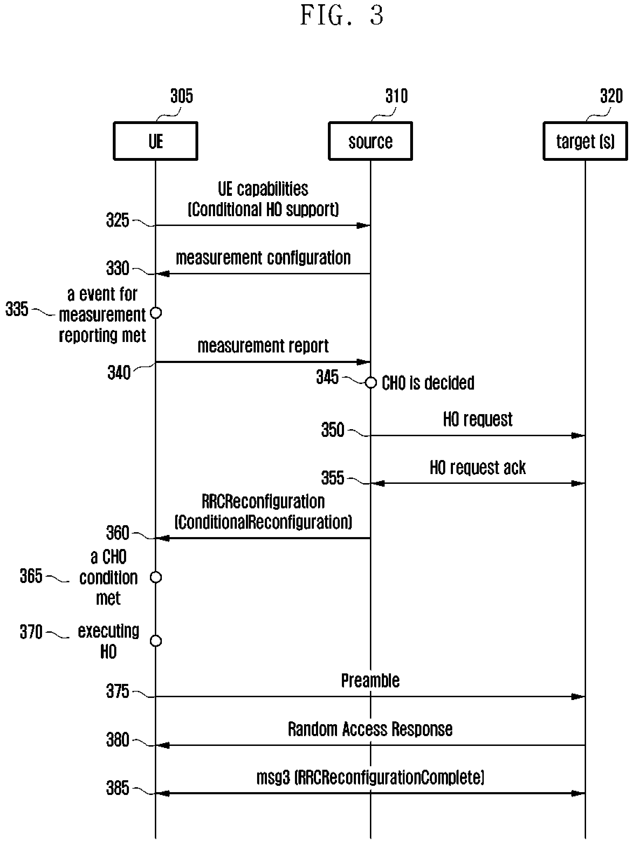

FIG. 3 is a message flow diagram illustrating a process of performing a condition-based handover operation in a mobile communication system according to an embodiment of the disclosure.

With reference to FIG. 3, a UE 305 may report capability information thereof to a source cell 310 (step 325). The capability information may include information indicating whether the UE 305 supports condition-based handover.

The UE 305 may receive a predetermined RRC message including measurement configuration from the source cell 310 (step 330).

The UE 305 may apply the measurement configuration to measure a signal quality of a serving cell and neighboring cells, and when a periodically or configured event occurs (335), the UE 305 may report the collected cell measurement information to the source cell 310 (step 340).

The source cell 310 may determine whether to trigger a condition-based handover operation based on the reported cell measurement information (step 345). In order to configure the condition-based handover, the UE 305 should be able to support the condition-based handover.

When the source cell 310 determines to trigger the condition-based handover, the source cell 310 may request the condition-based handover to one or more target cells 320 through a predetermined inter-node message (step 350).

The target cells 320 that have received the request may accept the request and transmit handover configuration information necessary for the condition-based handover operation to the source cell 310 (step 355). Target cells that do not accept the request are excluded from the condition-based handover.

The source cell 310 may store the handover configuration information and additional configuration information received from the target cells 320 in a predetermined RRC message and RRCReconfiguration, and transmit the RRC message to the UE 305 (step 360). The configuration information may include IDs of the target cells 320, frequency information, configuration information (e.g., dedicated preamble information, dedicated radio resource information for each target cell, and the like) required for a random access operation to the target cells 320, transmission power information, C-RNTI information used in each target cell 320, conditions for triggering a random access operation to each target cell 320, and the like. Each of the above conditions may be different for each target cell 320, and a plurality of conditions may be configured for one target cell 320. With a Rel-16 NR system, maximum two conditions may be configured for each target cell 320, and when all the configured conditions are satisfied, the UE 305 may perform a handover operation to the target cell 320 corresponding to the conditions. The conditions that may be configured are as follows. In the disclosure, the following conditions are referred to as conventional received signal quality-based conditions.

1) CondEvent A3: Conditional reconfiguration candidate becomes amount of offset better than PCell/PSCell
2) CondEvent A5: PCell/PSCell becomes worse than absolute threshold1 AND Conditional reconfiguration candidate becomes better than another absolute threshold2

The UE 305 that has received the handover configuration information may evaluate whether the provided condition(s) is(are) satisfied (step 365).

If conditions related to the specific target cell 320 are satisfied, the UE 305 may perform a random access process to the target cell 320 and run a T304 timer (step 370). For example, if CondEvent A3 is configured to the above condition and satisfies it, the UE 305 may transmit the provided preamble to the associated target cell 320 (step 375). If a dedicated preamble is not provided, the UE 305 may transmit one of preambles used on a contention basis.

The target cell 320 that has received the preamble may transmit a random access response (RAR) to the UE 305 (step 380).

The UE 305 may transmit msg3 to the target cell 320 using UL grant information stored in the RAR (step 385). The msg3 may store an RRCConnectionReconfigurationComplete message in the case of an LTE system and an RRCReconfigurationComplete message in the case of an NR system.

When the random access process is successfully completed, the UE 305 may regard that the condition-based handover has been successfully completed and stop the running T304 timer. If the condition-based handover is not successfully completed until the T304 timer expires, the UE 305 may regard the handover as a failure.

If the handover is successfully completed, the UE 305 may delete the handover configuration information. When the source cell 310 receives a report of successful handover from the target cell 320, the source cell 310 may delete context information of the UE 305. The success may be determined by an UE context release message, which is an inter-node message transmitted to the source cell 310 to the target cell 320. Further, the source cell 310 may instruct other candidate target cells included in the handover configuration information to delete the handover configuration information (or UE context information) (or notify them that it is no longer valid). The candidate target cells themselves may delete the handover configuration information after a predetermined time has elapsed after receiving the handover request, without an instruction from the source cell 310.

If conditions related to a specific target cell are satisfied, the UE 305 executes handover to the target cell 320 (step 370), but the handover may not be successfully completed until T304 expires. In this case, the UE 305 may find a suitable cell through a cell selection operation. If there is a suitable cell, the UE 305 may determine whether the found suitable cell is one of the configured target cell candidates. If the found suitable cell is one of the configured target cell candidates, the UE 305 may execute handover to the suitable cell. In the disclosure, this is referred to as an HO failure recovery operation. If the found suitable cell is not one of the configured target cell candidates, the UE 305 may transmit an RRCReestablishmentRequest message to the suitable cell.

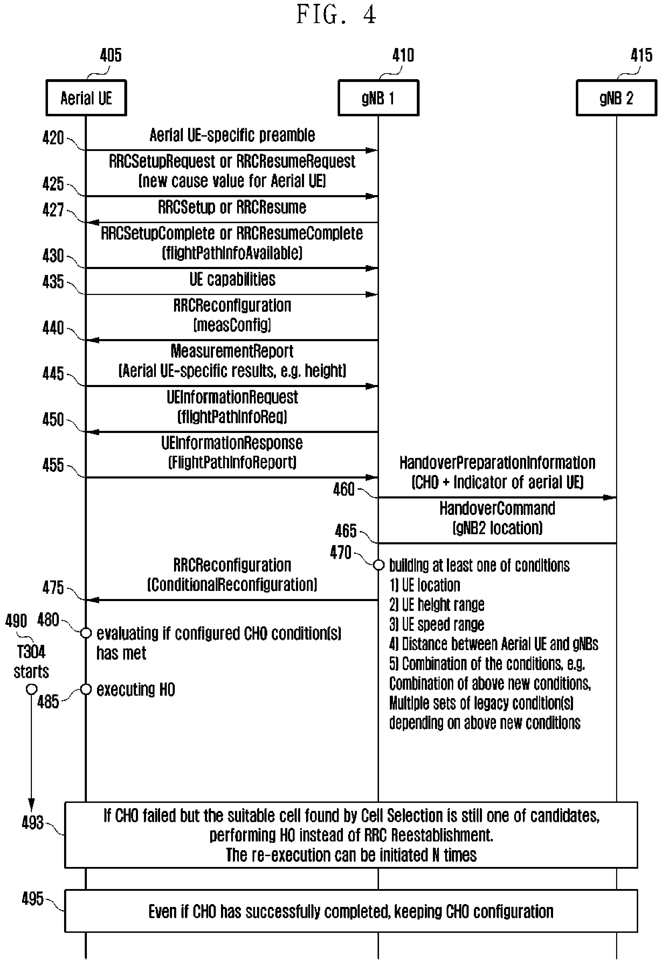

FIG. 4 is a message flow diagram illustrating a process of executing condition-based handover for an aerial UE in a new radio according to an embodiment of the disclosure.

In order to switch to a connected mode (RRC_CONNECTED), an aerial UE 405 may transmit an aerial UE-specific preamble to a first base station 410 (step 420). The base station may provide a preamble dedicated to the aerial UE through broadcasting system information. Because the aerial UE-specific preamble cannot be used by general UEs, the aerial UE-specific preamble may improve the probability of successful preamble transmission to aerial UEs in crowded situations.

In particular, aerial UEs may need to transmit and receive flight control information through next generation mobile communications. Therefore, the base station may allocate separate radio resources that cannot be used by general UEs, as described above. When the base station does not separately configure the aerial UE-specific random access channel (RACH) radio resource, aerial UEs may attempt a connection to the base station 410 using general RACH radio resources.

While performing an establishment or resume operation, the aerial UE 405 may report an indicator indicating access from the aerial UE 405 to the base station 410 through a predetermined RRC message (e.g., RRCSetupRequest or RRCResumeRequest) (step 425). For example, a new cause value indicating aerial UE access may be defined to an establishmentCause field of RRCSetupRequest or a resumeCause field of RRCResumeRequest. The cause value may be used by the base station 410 for determining whether to reject the access.

The first base station 410 that has received the message may transmit an RRCSetup or RRCResume message to the UE 405 (step 427).

The aerial UE 405 may transmit an indicator indicating that the aerial UE 405 has predetermined flight path information, and an RRCSetupComplete or RRCResumeComplete message including a flightPathInfoAvailable field to the base station (step 430).

The aerial UE 405 may report capability information thereof to the base station 410 (step 435). The capability information may include an indicator indicating whether aerial UE support technologies proposed in the disclosure are supported.

In order to support the mobility of the aerial UE 405, the base station 410 may configure a cell measurement operation (step 440). The aerial UE 405 may report cell measurement results to the base station 410 according to the cell measurement configuration information (step 445). The measurement result may include height information of the aerial UE 405.

The base station 410 may request flight path information of the aerial UE 405 using a UEInformationRequest message (step 450). The aerial UE 405 that has received the request may transmit flight path information thereof to the base station 410 using the UEInformationResponse message (step 455).

The first base station 410 that has received the measurement result and flight path information from the aerial UE 405 may determine whether to configure a condition-based handover operation to the aerial UE 405.

If it is determined to execute a condition-based handover, the first base station 410 may transmit a Handover-PreparationInformation message requesting the condition-based handover to a second base station 415 determined to the target base station (step 460). The message may include an indicator indicating that the handover request is for a condition-based handover and that the UE 405 to execute handover is an aerial UE. There may be two or more target base stations for the condition-based handover.

The second base station 415 may transmit a HandoverCommand to the first base station 410 (465). The HandoverCommand may include information necessary for the first base station 410 to determine HO execution conditions in the condition-based handover. For example, the HandoverCommand may include location information of the second base station 415.

The first base station 410 may determine HO execution conditions in the condition-based handover (step 470). The HO execution conditions may be determined in advance and be included in the HandoverPreparationInformation message to be reported to the second base station 415.

In the disclosure, the following options are proposed as the HO execution conditions.

1) First option: Execute HO based on UE location

When the aerial UE 405 reaches the configured location, the aerial UE 405 executes handover. If the source base station 410 knows in advance an expected flight path of the aerial UE 405, the source base station 410 may enable to execute handover to a specific target cell 415 when the aerial UE 405 reaches a specific point. In addition to location conditions of the aerial UE 405, conventional received signal quality-based conditions may also be provided.

For example, one or more location conditions may be configured for each target candidate cell, and the maximum N (e.g., N=2) number of conventional received signal quality-based conditions may be configured for each location condition.

For example,

first condition set corresponding to a first location of the aerial UE
second condition set corresponding to a second location of the aerial UE
third condition set corresponding to a third location of the aerial UE
fourth condition set corresponding to a fourth location of the aerial UE

The nth condition set may include not only conventional received signal quality-based conditions but also other optional conditions. If the aerial UE 405 has reached the preconfigured location, the aerial UE 405 may evaluate whether the conventional received signal-based condition(s) configured together is(are) satisfied. If the conventional received signal-based condition(s) corresponding to a location thereof is(are) satisfied, the aerial UE 405 may execute handover to the corresponding target cell 415.

2) Second option: Execute HO based on UE height

When the aerial UE 405 reaches a configured height, the aerial UE 405 executes handover. In addition to the height conditions, conventional received signal quality-based conditions also need to be provided. Wireless channel states in which the aerial UE 405 experiences at each specific height may be different. Therefore, separate received signal quality-based conditions may be configured for each height range. For example, one or more height (range) conditions may be configured for each target candidate cell, and the maximum N (e.g., N=2) of conventional received signal quality-based conditions may be configured for each height condition. For example,

first condition set corresponding to a height of the aerial UE in the range of a ground level to 10 m.

second condition set corresponding to a height of the aerial UE in the range of 10 m to 50 m
third condition set corresponding to a height of the aerial UE in the range of 50 to 100 m
fourth condition set corresponding to a height of the aerial UE in the range of more than 100 m

The nth condition set may include not only conventional received signal quality-based conditions but also other optional conditions. If a height of the aerial UE 405 is within the preconfigured height range, the aerial UE 405 may evaluate whether the conventional received signal-based condition(s) configured together is(are) satisfied. If the conventional received signal-based condition(s) corresponding to a height thereof is(are) satisfied, the aerial UE 405 may execute handover to the corresponding target cell 415.

3) Third option: Execute HO based on UE flight speed

When the aerial UE 405 reaches the configured flight speed, the aerial UE 405 executes handover. In addition to the above flight speed conditions, conventional received signal quality-based conditions also need to be provided. Wireless channel states in which the aerial UE 405 experiences for each specific flight speed (range) may be different. Therefore, separate received signal quality-based conditions may be configured for each flight speed range. For example, one or more flight speed (range) conditions may be configured for each target candidate cell, and the maximum N (e.g., N=2) of conventional received signal quality-based conditions may be configured for each flight speed condition. For example,

first condition set corresponding to the flight speed of the aerial UE in the range of stop to 5 km/h
second condition set corresponding to the flight speed of the aerial UE in the range of 5 km/h to 50 km/h
third condition set corresponding to the flight speed of the aerial UE in the range of 50 km/h to 100 km/h.
fourth condition set corresponding to the flight speed of the aerial UE in the range of more than 100 km/h

The nth condition set may include not only conventional received signal quality-based conditions but also other optional conditions. If a flight speed of the aerial UE 405 is within the preconfigured flight speed range, the aerial UE 405 evaluates whether the conventional received signal-based condition(s) configured together is(are) satisfied. If the conventional received signal-based condition(s) corresponding to a flight speed thereof is(are) satisfied, the aerial UE 405 may execute handover to the corresponding target cell 415.

4) Fourth option: Execute HO based on a distance between the UE and the (source or target) base station

When the distance between the aerial UE 405 and the source or target base station matches a preconfigured distance value, the aerial UE 405 executes handover. If the source base station 410 knows in advance the expected flight path of the aerial UE 405, when the aerial UE 405 is separated by a predetermined distance from the source cell 410 or when the aerial UE 405 approaches by a predetermined distance from the target cell 415, the aerial UE 405 may execute handover to a specific target cell 415. In addition to the distance condition between the aerial UE 405 and the base station, conventional received signal quality-based conditions may also be provided. For example, a distance condition between one or more aerial UEs and the base station may be configured for each target candidate cell, and the maximum N (e.g., N=2) of conventional received signal quality-based conditions may be configured for each distance condition. For example,

first condition set corresponding to a first distance between the aerial UE and the base station
second condition set corresponding to a second distance between the aerial UE and the base station
third condition set corresponding to a third distance between the aerial UE and the base station
fourth condition set corresponding to a fourth distance between the aerial UE and the base station

The nth condition set may include not only conventional received signal quality-based conditions but also other optional conditions. If a distance between the aerial UE 405 and the base station reaches a preconfigured distance value, the aerial UE 405 evaluates whether the conventional received signal-based condition(s) configured together is(are) satisfied. If the conventional received signal-based condition(s) corresponding to the distance between the aerial UE 405 and the base station is(are) satisfied, the aerial UE 405 may execute handover to the corresponding target cell 415.

5) Fifth option: Execute region-based HO

When the aerial UE 405 enters a preconfigured region, the aerial UE 405 executes handover. The aerial UE 405 evaluates whether a location thereof has entered a preconfigured region, and if the aerial UE 405 enters a configured region, the aerial UE 405 may execute handover to a specific target cell corresponding to the region. In addition to the region conditions, conventional received signal quality-based conditions may also be provided. For example, one or more regional conditions may be configured for each target candidate cell, and the maximum N (e.g., N=2) number of conventional received signal quality-based conditions may be configured for each regional condition. For example,

first condition set corresponding to a first region
second condition set corresponding to a second region
third condition set corresponding to a third region
fourth condition set corresponding to a fourth region

The nth condition set may include not only conventional received signal quality-based conditions but also other optional conditions. If the aerial UE 405 enters the preconfigured region, the aerial UE 405 evaluates whether the conventional received signal-based condition(s) configured together is(are) satisfied. If the conventional received signal-based condition(s) corresponding to a distance between the aerial UE 405 and the base station is(are) satisfied, the aerial UE 405 may execute handover to the corresponding target cell 415.

6) Sixth option: Combination of conventional received signal quality-based conditions and the above proposed conditions

The source base station 410 may configure a combination of the conventional received signal quality-based condition and the proposed conditions to the aerial UE 405 as conditions of condition-based handover. In this case, the aerial UE 405 may receive a configuration of one or more combinations for each target candidate cell. When all conditions constituting one condition combination corresponding to one target cell are satisfied, the aerial UE 405 may execute handover to the target cell 415 corresponding to the condition combination.

The source base station 410 may transmit condition-based handover configuration information to the aerial UE 405 using an RRCReconfiguration message (step 475).

The aerial UE 405 may evaluate whether the configured condition is satisfied (step 480). If all conditions constituting one condition combination corresponding to one target cell are satisfied, the aerial UE 405 may execute handover to the corresponding target cell 415 (step 485) and run the T304 timer (step 490).

If a handover operation to the target cell 415 is not successfully completed until the T304 timer expires, the aerial UE 405 may find one suitable cell through a cell selection operation. If the suitable cell is one of the preconfigured target candidate cells, the aerial UE 405 may execute handover to the cell. The number of times that may re-execute the handover may be configured by the source base station 410 to the aerial UE 405 as the condition-based handover configuration information (step 493).

If the handover operation to the target cell is successfully completed before the T304 timer expires, the aerial UE 405 may maintain the preconfigured condition-based handover configuration information without deleting it (step 495). Whether to maintain or delete the configuration information after the handover may be configured by the source base station 410 to the aerial UE 405 as the condition-based handover configuration information.

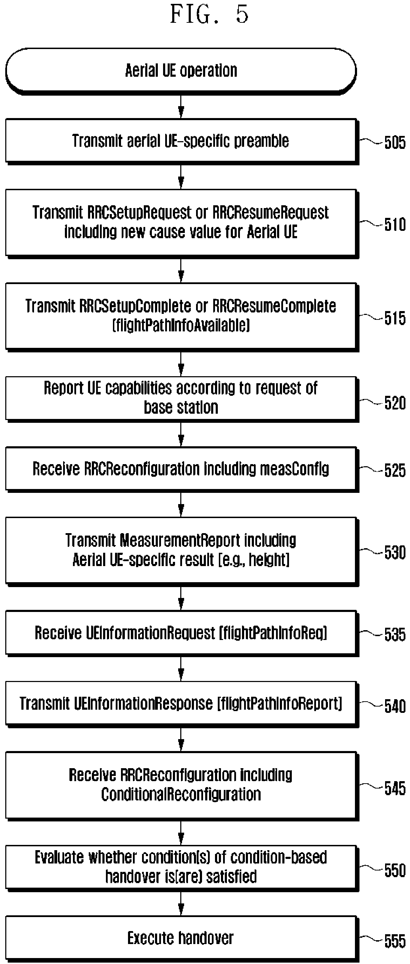

FIG. 5 is a flowchart illustrating a UE operation of executing condition-based handover for an aerial UE in a new radio according to an embodiment of the disclosure.

With reference to FIG. 5, in step 505, the aerial UE may transmit an aerial UE-specific preamble to the base station.

In step 510, the aerial UE may transmit an RRCSetupRequest or RRCResumeRequest message including a cause value indicating aerial UE access to the base station.

In step 515, the aerial UE may transmit an RRCSetupComplete or RRCResumeComplete message including an indicator indicating that there is expected flight path information thereof to the base station.

In step 520, the aerial UE may report capability information thereof according to a request of the base station.

In step 525, the aerial UE may receive cell measurement configuration information from the base station.

In step 530, the aerial UE may report cell measurement results to the base station.

In step 535, the aerial UE may receive a UEInformationRequest message requesting the flight path information from the base station.

In step 540, the aerial UE may report a UEInformationResponse message including flight path information thereof to the base station according to the request of the base station.

In step 545, the aerial UE may receive an RRCReconfiguration message including configuration information of condition-based handover from the base station.

In step 550, the aerial UE may evaluate whether conditions included in the configuration information are satisfied.

In step 555, the aerial UE may execute handover to one target cell satisfying the above conditions.

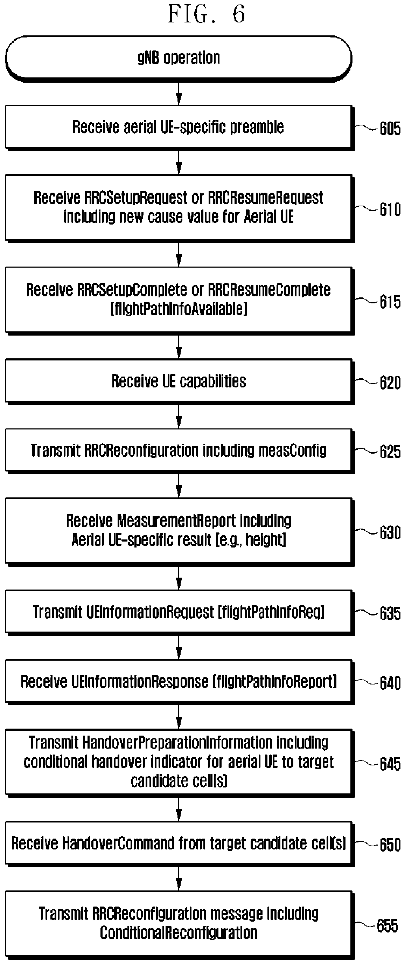

FIG. 6 is a flowchart illustrating a base station operation of executing condition-based handover for an aerial UE in a new radio according to an embodiment of the disclosure.

With reference to FIG. 6, in step 605, the base station may receive an aerial UE-specific preamble from one aerial UE.

In step 610, the base station may receive an RRCSetupRequest or RRCResumeRequest message including a cause value indicating aerial UE access from the aerial UE. Through the cause value, the base station may determine whether to reject the aerial UE access.

In step 615, the base station may receive, from the aerial UE, an RRCSetupComplete or RRCResumeComplete message including an indicator indicating that there is expected flight path information for the aerial UE.

In step 620, the base station may receive capability information of the aerial UE.

In step 625, the base station may transmit cell measurement configuration information to the aerial UE.

In step 630, the base station may receive cell measurement results from the aerial UE.

In step 635, the base station may transmit a UEInformationRequest message requesting the flight path information to the aerial UE.

In step 640, the base station may receive a UEInformationResponse message including flight path information of the aerial UE from the aerial UE.

In step 645, the base station may transmit a HandoverPreparationInformation message to a target candidate cell(s). The message may include an indicator indicating condition-based handover for the aerial UE.

In step 650, the base station may receive a HandoverCommand from the target candidate cell(s).

In step 655, the base station may transmit an RRCReconfiguration message including condition-based handover configuration information to the aerial UE.

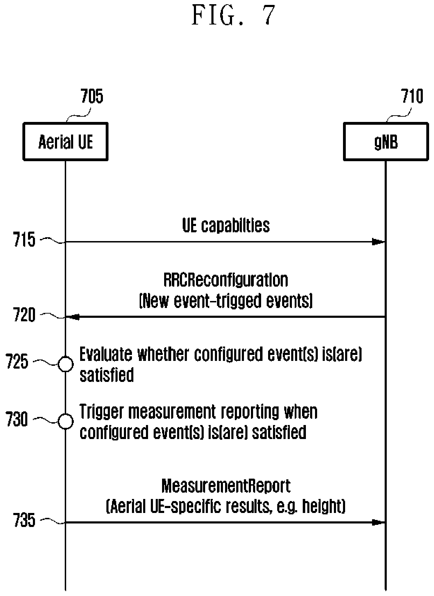

FIG. 7 is a message flow diagram illustrating a process of performing event-triggered cell measurement for an aerial UE in a new radio according to an embodiment of the disclosure.

With reference to FIG. 7, because an aerial UE 705 often flies at a high height above buildings, most of propagation characteristics experienced by the aerial UE 705 may be regarded as free-space propagation. Therefore, it may be regarded that an optimal location in which the aerial UE 705 executes handover has been determined in advance. Further, as described above, there are many use cases that the aerial UE 705 moves along a determined flight path.

For this reason, considering location-based measurement events, the mobility of the aerial UE 705 may be supported more effectively. The disclosure proposes the following new measurement event. A base station 710 may configure the following new measurement event to the aerial UE 705.

1) Location-based measurement event of aerial UE

When the aerial UE 705 matches or approaches a configured location, the aerial UE 705 may trigger measurement reporting.

For example,

Location of Aerial UE is same as threshold
Enter: ds + hysteresis < threshold
Leave: ds - hysteresis > threshold

2) Measurement event based on a distance between the aerial UE and the (source and target) base station

If a distance between the aerial UE 705 and the source base station 710 or a distance between the aerial UE 705 and the target base station matches or approaches a configured distance value, the aerial UE 705 may trigger measurement reporting.

In order to calculate a distance between the source or target base stations, because the aerial UE 705 may need location information of the source or target base station, the source base station 710 that configures the measurement event may provide together location information of the source or target base station.

For example, it may be as follows.

D1 (Serving becomes better than threshold, distance-based)

Enter: ds + hysteresis < threshold
Leave: ds - hysteresis > threshold
ds: distance from serving cell (it may be 2D distance or 3D distance). The location of the serving cell is provided by gNB via RRC signaling as e.g. reference serving location.

D2 (Serving becomes worse than threshold, distance-based)

Enter: ds - hysteresis > threshold
Leave: ds + hysteresis < threshold

D3 (Neighbour becomes offset better than PCell/ PSCell, distance-based)

Enter: dn + hysteresis < dp + offset
Leave: dn - hysteresis > dp + offset
dn: distance from neighbor cell
dp: distance form serving cell (serving PCell/PSCell)

D4 (Neighbour becomes better than threshold, distance-based)

Enter: dn+ hysteresis < threshold
Leave: dn - hysteresis > threshold

D5 (PCell/ PSCell becomes worse than threshold1 and neighbour becomes better than threshold2, distance-based)

Enter: dp- hysteresis > threshold 1 and dn+ hysteresis < threshold2
Leave: dp + hysteresis < threshold1 or dn - hysteresis > threshold2

3) Region-based measurement event

When the aerial UE 705 enters the configured region, the aerial UE 705 may trigger measurement reporting. For example, the region may be a two-dimensional or three-dimensional region in the shape of a circle or sphere centered on one base station.

The aerial UE 705 may report capability information thereof to the base station 710 (step 715). Reporting of the capability information may be made according to a request from the base station 710. The capability information may include an indicator indicating whether a new measurement event assuming an aerial UE is supported.

The aerial UE 705 may receive a message, for example, an RRCReconfiguration message including new event-triggered measurement configuration information from the base station 710 (step 720). A description on the new event-triggered measurement configuration information has been described above.

The aerial UE 705 may evaluate whether the configured event is satisfied (step 725). If a predetermined configured event is satisfied, the aerial UE 705 may trigger measurement reporting (step 730). The aerial UE 705 may report a message, for example, a MeasurementReport message additionally including aerial UE-specific measurement results (e.g., height, speed, and the like) to the base station 710 (step 735).

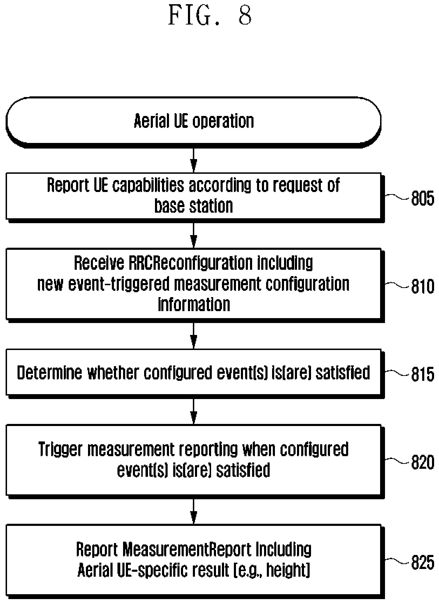

FIG. 8 is a flowchart illustrating a UE operation of performing event-triggered cell measurement for an aerial UE in a new radio according to an embodiment of the disclosure.

With reference to FIG. 8, in step 805, the aerial UE may report capability information thereof to the base station according to a request of the base station. The capability information may include an indicator indicating whether a new measurement event assuming an aerial UE is supported.

In step 810, the aerial UE may receive an RRCReconfiguration message including new event-triggered measurement configuration information from the base station.

In step 815, the aerial UE may evaluate whether the configured event is satisfied.

In step 820, if the configured event is satisfied, the aerial UE may trigger measurement reporting.

In step 825, the aerial UE may report a MeasurementReport message additionally including aerial UE-specific measurement results to the base station.

In the detailed description of the disclosure, specific embodiments have been described, but combinations of various modifications and embodiments are possible.

For example, according to an embodiment of the disclosure, a method of executing condition-based handover of an aerial UE is proposed. According to another embodiment of the disclosure, a method of performing cell measurement of an aerial UE is proposed. Combinations of the above embodiments are also possible. Specifically, in a process of executing condition-based handover of an aerial UE, a method of performing cell measurement of the aerial UE may be used.

Therefore, the scope of the disclosure should not be limited to the described embodiments, and combinations of various modifications and embodiments are also possible. Further, the scope of the disclosure should be determined not only by the scope of the claims to be described later, but also by equivalents to the scope of the claims.

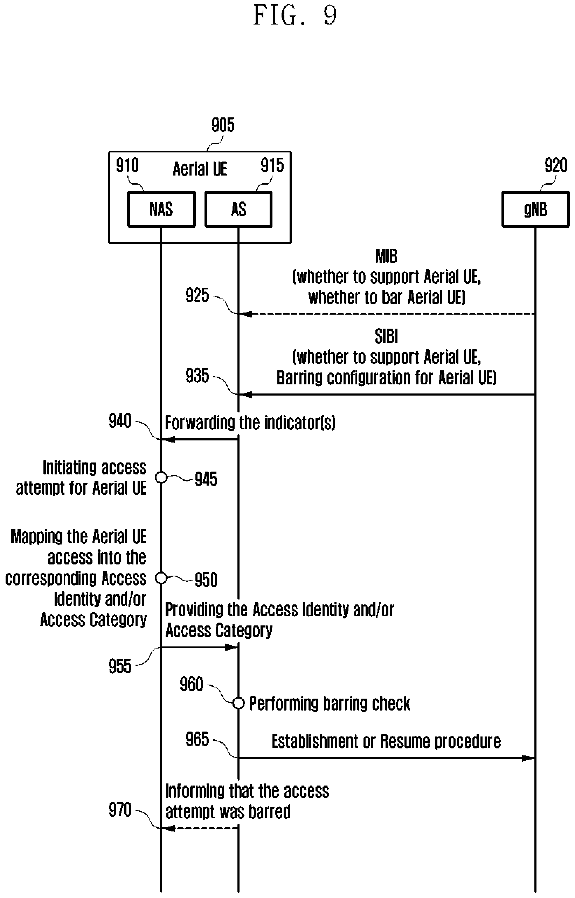

FIG. 9 is a message flow diagram illustrating a process of performing an access control operation for an aerial UE in a new radio according to an embodiment of the disclosure.

In the case of using a new radio in order to control an aerial UE 905, access of the aerial UE 905 needs to be processed with a priority. Otherwise, the aerial UE 905 may not be operated at a desired time point. Therefore, the disclosure proposes a method of preferentially allowing access to the aerial UE 905.

The aerial UE access refers to access for transmitting and receiving the control or user data related to an aerial UE (UAV or UAM). To this end, the disclosure proposes an aerial UE-specific new access category or access identity, and it is characterized that a base station 920 may provide separate barring configuration information for the new access category or access identity. The aerial UE-specific access category may be defined as a new access category separated according to control signals and user data.

With reference to FIG. 9, the base station 920 may broadcast a predetermined system information block (SIB) (e.g., always broadcasted SIB1) or a mater information block (MIB) including an indicator indicating that it may support specialized functions for the aerial UE 905 (steps 925 and 935).

In the case that the mobile communication network cannot temporarily support the aerial UE 905 due to predetermined reasons, the base station 920 may broadcast a MIB including an indicator indicating that aerial UE access is barred (step 925). The base station 920 may broadcast barring configuration information corresponding to an aerial UE-specific access category or access identity using a predetermined SIB (step 935).

An assess stratum (AS) layer 915 of the aerial UE 905 that has received the system information may transmit the indicator information received through the system information to a non access stratum (NAS) layer 910 of the aerial UE 905 (step 940).

Even if the base station 920 does not support specialized functions for the aerial UE 905, the aerial UE NAS 910 may trigger service access, but instead the aerial UE NAS 910 regards aerial UE access as general conventional access and will attempt access to the base station 920. That is, upon SERVICE REQUEST, the aerial UE NAS 910 will map aerial UE access to the conventional access category and access identity and transmit it to the aerial UE AS 915.

When the base station 920 supports specialized functions for the aerial UE 905, upon SERVICE REQUEST, the aerial UE NAS 910 will map aerial UE access (step 945) to a new access category and access identity (step 950) and transmit it to the aerial UE AS 915 (step 955). In this case, the aerial UE NAS 910 may provide a cause value indicating aerial UE access to the aerial UE AS 915.

The aerial UE AS 915 may apply barring configuration information corresponding to the aerial UE-specific access category or access identity provided from the base station 920 to perform a barring check operation for the aerial UE access (step 960).

In the disclosure, an operation of determining whether the service request is allowed is referred to as a barring check. The aerial UE 905 may receive system information including the access control configuration information and store the configuration information. The barring configuration information is provided for each public land mobile network (PLMN) and access category. A BarringPerCatList IE is used for providing barring configuration information for access categories belonging to one PLMN. To this end, a PLMN id and barring configuration information for each access category may be included in the IE in the form of a list. The barring configuration information for each access category may include an access category id (or index) indicating a specific access category, uac-BarringForAccessIdentity field, uac-BarringFactor field, and uac-Barringtime field.

The above-described barring check operation is as follows. First, each bit constituting a uac-BarringForAccessIdentityList corresponds to one access identity, and when the bit value is indicated as '0', access related to the access identity is allowed. For at least one of the mapped access identities, if at least one of the corresponding bits in uac-BarringForAccessIdentity is '0', access is allowed. For at least one of the mapped access identities, if any of the corresponding bits in uac-BarringForAccessIdentity is not '0', an additional barring check to be described later is performed additionally using the uac-BarringFactor field. A range of the uac-BarringFactor $\alpha$ is $0 \leq \alpha < 1$. The aerial UE AS 915 derives one random value of $0 \leq rand < 1$, and if the random value is smaller than the uac-BarringFactor, access is not barred, otherwise, it is regarded that access is barred. When it is determined that access is barred, the aerial UE AS 915 may delay the access attempt for a predetermined time derived using Equation 1. The aerial UE AS 915 may drive a timer with the time value. In the disclosure, the timer is referred to as a barring timer.

$$\text{"Tbarring"} = (0.7 + 0.6 * rand) * \text{uac-BarringTime}. \qquad [\text{Equation 1}]$$

When the access is barred, the aerial UE AS 915 may notify the aerial UE NAS 910 of this (step 970). When the derived predetermined time has expired, the aerial UE AS 915 may notify the aerial UE NAS 910 that access may be requested again (barring alleviation). From this time, the aerial UE NAS 910 may request again access to the aerial UE AS 915.

When the service request is allowed according to the predetermined rule, the aerial UE AS 915 may request RRC connection establishment (or RRC connection resume) to the network 920 (step 965).

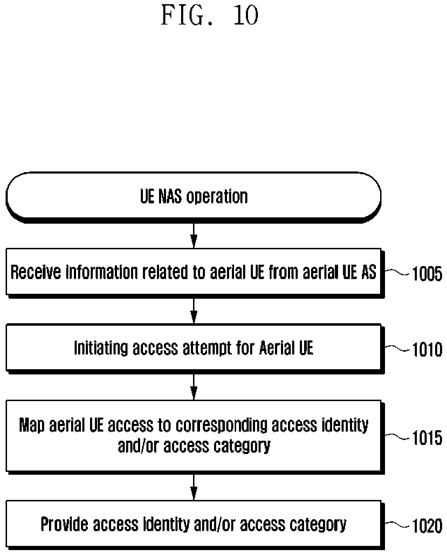

FIG. 10 is a flowchart illustrating a UE NAS operation of performing an access control operation for an aerial UE in a new radio according to an embodiment of the disclosure.

With reference to FIG. 10, in step 1005, the aerial UE NAS may receive, from the aerial UE AS, an indicator indicating that the base station may support specialized functions for the aerial UE.

In step 1010, the aerial UE NAS may trigger aerial UE access.

In step 1015, the aerial UE NAS may map aerial UE access to a new access category and access identity.

In step 1020, the aerial UE NAS may request a barring check for the triggered aerial UE access to the aerial UE AS. In this case, the aerial UE NAS may provide an access category, access identity, and cause information corresponding to the access to the aerial UE AS.

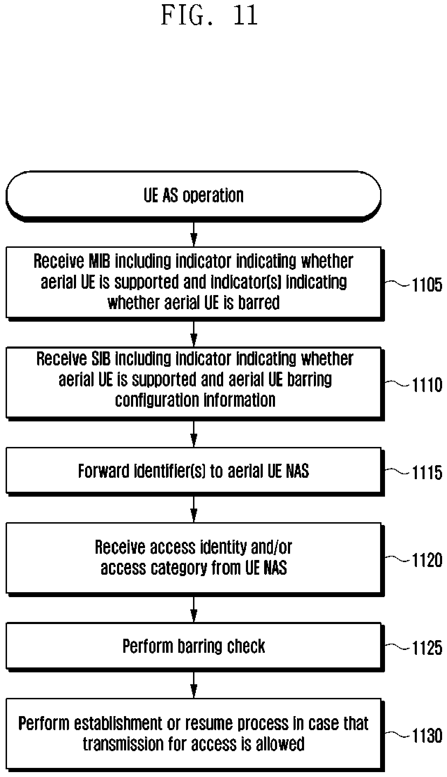

FIG. 11 is a flowchart illustrating a UE AS operation of performing an access control operation for an aerial UE in a new radio according to an embodiment of the disclosure.

With reference to FIG. 11, in step 1105, the aerial UE AS may receive, from the base station, a MIB including an indicator indicating that specialized functions for the aerial UE may be supported, an indicator indicating that aerial UE access is barred, and barring configuration information corresponding to an aerial UE-specific access category or access identity.

In step 1110, the aerial UE AS may receive a SIB including an indicator indicating that specialized functions for the aerial UE may be supported and barring configuration information corresponding to an aerial UE-specific access category or access identity from the base station. When an indicator indicating that specialized functions for the aerial UE may be supported is included in the MIB, there may be no need to include the indicator in the SIB.

In step 1115, the aerial UE AS may transmit the received information to the aerial UE NAS.

In step 1120, the aerial UE AS may receive a request for access transmission from a higher layer (aerial UE NAS). The request may include an access category, access identity, and cause information corresponding to the access.

In step 1125, the aerial UE AS may perform a barring check for the access request.

In step 1130, when transmission for the access is allowed as a result of the barring check, the aerial UE AS may perform an establishment or resume process.

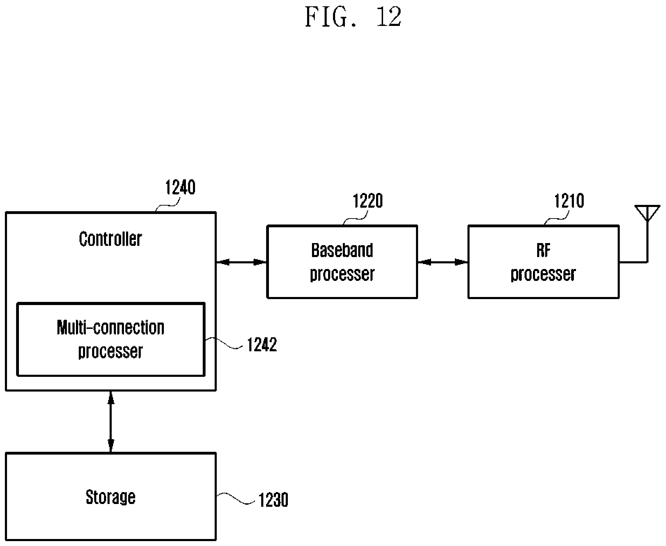

FIG. 12 is a block diagram illustrating an internal structure of a UE according to an embodiment of the disclosure.

With reference to FIG. 12, the UE may include a radio frequency (RF) processer 1210, a baseband processer 1220, a storage 1230, and a controller 1240.

The RF processer 1210 performs functions for transmitting and receiving signals through a wireless channel, such as band conversion and amplification of signals. That is, the RF processer 1210 up-converts a baseband signal provided from the baseband processer 1220 into an RF band signal and transmits the RF band signal through an antenna, and down-converts an RF band signal received through the antenna into a baseband signal. For example, the RF processer 1210 may include a transmission filter, a reception filter, an amplifier, a mixer, an oscillator, a digital to analog convertor (DAC), an analog to digital convertor (ADC), and the like. In FIG. 12, although only one antenna is illustrated, the UE may be equipped with a plurality of antennas. Further, the RF processer 1210 may include multiple RF chains. Furthermore, the RF processer 1210 may perform beamforming. For the beamforming, the RF processer 1210 may adjust a phase and magnitude of each signal transmitted and received through a plurality of antennas or antenna elements. Further, the RF processer 1210 may perform MIMO and receive multiple layers when performing a MIMO operation.

The baseband processer 1220 performs a conversion function between baseband signals and bit strings according to the physical layer specification of the system. For example, when transmitting data, the baseband processer 1220 may encode and modulate the transmission bit string to generate complex symbols. Further, when receiving data, the baseband processer 1220 restores the received bit string by demodulating and decoding the baseband signal provided from the RF processer 1210. For example, in the case of following an orthogonal frequency division multiplexing (OFDM) method, when transmitting data, the baseband processer 1220 may generate complex symbols by encoding and modulating the transmission bit string, map the complex symbols to subcarriers, and constitute OFDM symbols through inverse fast Fourier transform (IFFT) operation and cyclic prefix (CP) insertion. Further, when receiving data, the baseband processer 1220 divides the baseband signal provided from the RF processer 1210 into an OFDM symbol unit, restore signals mapped to subcarriers through a fast Fourier transform (FFT) operation, and then restores the received bit string through demodulation and decoding.

The baseband processer 1220 and the RF processer 1210 transmit and receive signals, as described above. Accordingly, the baseband processer 1220 and the RF processer 1210 may be referred to as a transmitter, a receiver, a transceiver, or a communication unit. Furthermore, at least one of the baseband processer 1220 or the RF processer 1210 may include multiple communication modules in order to support multiple different wireless access technologies. Further, at least one of the baseband processer 1220 or the RF processer 1210 may include different communication modules in order to process signals of different frequency bands. For example, the different wireless access technologies may include a wireless LAN (e.g., IEEE 802.11), a cellular network (e.g., LTE), and the like. Further, the different frequency bands may include a super high frequency (SHF) (e.g., 2.NRHz, NRhz) band and a millimeter wave (e.g., 60GHz) band.

The storage 1230 stores data such as a basic program, an application program, and configuration information for operation of the UE. The storage 1230 provides stored data according to the request of the controller 1240.

The controller 1240 controls overall operations of the UE. For example, the controller 1240 transmits and receives signals through the baseband processer 1220 and the RF processer 1210. Further, the controller 1240 writes data in and reads data from the storage 1240. For this purpose, the controller 1240 may include at least one processor. For example, the controller 1240 may include a communication processor (CP) for performing the control for communication and an application processor (AP) for controlling upper layers such as application programs.

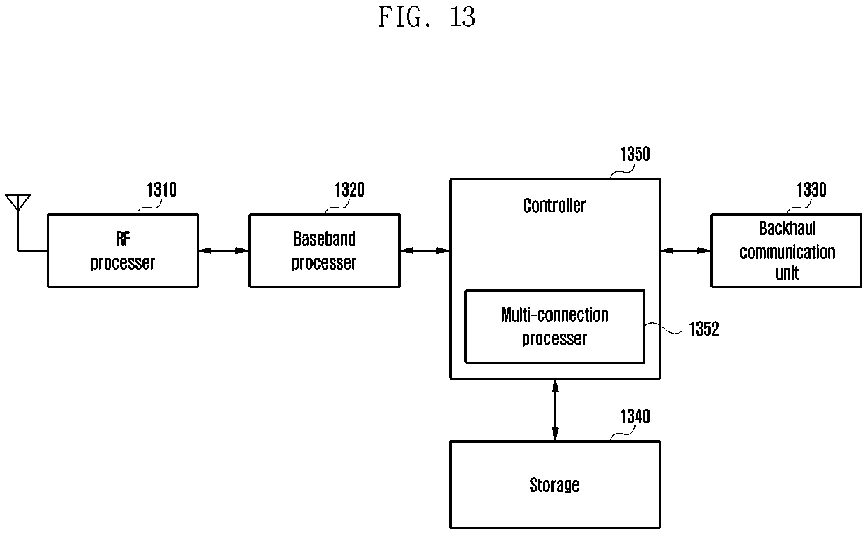

FIG. 13 is a block diagram illustrating a constitution of a base station according to an embodiment of the disclosure.

With reference to FIG. 13, the base station may include an RF processer 1310, a baseband processer 1320, a backhaul communication unit 1330, a storage 1340, and a controller 1350.

The RF processer 1310 performs functions for transmitting and receiving signals through a wireless channel, such as band conversion and amplification of signals. That is, the RF processer 1310 up-converts a baseband signal provided from the baseband processer 1320 into an RF band signal and transmits the RF band signal through an antenna, and down-converts an RF band signal received through the antenna into a baseband signal. For example, the RF processer 130 may include a transmission filter, a reception filter, an amplifier, a mixer, an oscillator, a DAC, an ADC, and the like. In FIG. 13, although only one antenna is illustrated, the base station may be equipped with a plurality of antennas. Further, the RF processer 1310 may include multiple RF chains. Furthermore, the RF processer 1310 may perform beamforming. For the beamforming, the RF processer 1310 may adjust a phase and magnitude of each signal transmitted and received through a plurality of antennas or antenna elements. The RF processer 1310 may transmit one or more layers to perform a downlink MIMO operation.

The baseband processer 1320 performs a conversion function between baseband signals and bit strings according to the physical layer specification of wireless access technology. For example, when transmitting data, the baseband processer 13230 may encode and modulate a transmission bit string to generate complex symbols. Further, when receiving data, the baseband processer 1320 restores the received bit string by demodulating and decoding the baseband signal provided from the RF processer 1310. For example, in the case of following an OFDM method, when transmitting data, by encoding and modulating the transmission bit string, the baseband processor 1320 may generate complex symbols, map the complex symbols to subcarriers, and constitute OFDM symbols through an IFFT operation and CP insertion. Further, when receiving data, the baseband processer 1320 divides the baseband signal provided from the RF processer 1310 into OFDM symbols, restores signals mapped to subcarriers through an FFT operation, and then restores a received bit string through demodulation and decoding. The baseband processer 1320 and the RF processer 1310 transmit and receive signals, as described above. Accordingly, the baseband processer 1320 and the RF processer 130 may be referred to as a transmitter, a receiver, a transceiver, a communication unit, or a RF unit.

The backhaul communication unit 1330 provides an interface for communicating with other nodes in the network. That is, the backhaul communication unit 1330 converts a bit string transmitted from a main base station to another node, for example, an auxiliary base station, a core network, and the like, to a physical signal, and converts a physical signal received from the other node to a bit string.

The storage 1340 stores data such as basic programs, application programs, and configuration information for operation of the base station. In particular, the storage 1340 may store information on bearers assigned to an accessed UE, measurement results reported from the accessed UE, and the like. Further, the storage 1340 may store information that serves as a criterion for determining whether to provide or suspend multiple connections to the UE. The storage 1340 provides stored data according to the request of the controller 1350.

The controller 1350 controls overall operations of the base station. For example, the controller 1350 may transmit and receive signals through the baseband processer 1320 and the RF processer 1310 or through the backhaul communication unit 1330. Further, the controller 1350 writes data in and reads data from the storage 1340. For this purpose, the controller 1350 may include at least one processor.

It should be noted that the constitution diagrams, illustrative diagrams of control/data signal transmission method, illustrative operation procedure diagrams, and constitution diagrams illustrated in FIGS. 1 to 13 are not intended to limit the scope of the disclosure. That is, it should not be construed that all components, entities, or operational steps described with reference to FIGS. 1 to 13 are essential components for carrying out the disclosure, and even if only some components are included, it may be implemented as long as it does not harm the essence of the disclosure.

The operations of the network entity or UE described above may be realized by providing a memory device storing the corresponding program code in any component within the network entity or UE device. That is, the controller of the network entity or the UE device may execute the operations described above by reading and executing the program code stored in the memory device by a processor or a central processing unit (CPU).

Various components, modules, and the like of a network entity, base station, or UE device described in this specification may be operated using hardware circuits, for example, complementary metal oxide semiconductor-based logic circuits, firmware, software, and/or hardware, and hardware circuitry such as a combination of firmware and/or software inserted into a machine readable medium. As an example, various electrical structures and methods may be executed using electrical circuits such as transistors, logic gates, and application-specific integrated circuits.

In the detailed description of the disclosure, although specific embodiments have been described, various modifications are possible without departing from the scope of the disclosure. Therefore, the scope of the disclosure should not be limited to the described embodiments and should be determined by the claims described below as well as by those equivalent to the claims.

**Claims**

1. A method performed by an aerial terminal executing conditional handover in a wireless communication system, the method comprising:

    receiving, from a base station, a first radio resource control (RRC) message including condition information for executing the conditional handover of the aerial terminal;
    determining whether there is a cell satisfying conditions based on the first RRC message; and
    executing, in the case that there is a cell satisfying the above conditions, handover to the cell,
    wherein the condition information is determined based on at least one of a location, height, or speed of the aerial terminal.

2. The method of claim 1, wherein the condition information is determined based on at least one of a location, height, or speed of the aerial terminal and a signal quality.

3. The method of claim 1, further comprising transmitting, to the base station, a second RRC message including a predetermined flight path information related indicator.

4. The method of claim 1, further comprising:

    receiving, from the base station, a third RRC message including a measurement trigger condition;
    determining whether the measurement trigger condition is satisfied; and
    reporting, in the case that the measurement trigger condition is satisfied, measurement results,
    wherein the measurement trigger condition is determined based on at least one of a location, distance, or place of the aerial terminal.

5. A method performed by a base station supporting conditional handover in a wireless communication system, the method comprising:

    receiving measurement results from an aerial terminal;
    determining condition information for executing conditional handover based on the measurement results; and
    transmitting a first radio resource control (RRC) message including the condition information,
    wherein the condition information is determined based on at least one of a location, height, and speed of the aerial terminal.

6. The method of claim 5, wherein the condition is determined based on at least one of a location, height, or speed of the aerial terminal and a signal quality.

7. The method of claim 5, further comprising receiving, from the aerial terminal, a second RRC message including a predetermined flight path information related indicator.

8. The method of claim 5, further comprising transmitting a third RRC message including a measurement trigger condition to the aerial terminal,
wherein the measurement trigger condition is determined based on at least one of a location, distance, or place of the aerial terminal.

9. An aerial terminal for executing conditional handover in a wireless communication system, the aerial terminal comprising:

    a transceiver configured to transmit and receive signals; and

a controller,

wherein the controller is configured to control to receive a first radio resource control (RRC) message including condition information for executing conditional handover of the aerial terminal from a base station, to determine whether there is a cell satisfying conditions based on the first RRC message, and to execute handover to the cell in the case that there is a cell satisfying the above conditions, and

the condition information is determined based on at least one of a location, height, or speed of the aerial terminal.

10. The aerial terminal of claim 9, wherein the condition information is determined based on at least one of a location, height, or speed of the aerial terminal and a signal quality.

11. The aerial terminal of claim 9, wherein the controller is configured to control to transmit a second RRC message including a predetermined flight path information related indicator to the base station.

12. The aerial terminal of claim 9, wherein the controller is configured to control to receive a third RRC message including a measurement trigger condition from the base station, to determine whether the measurement trigger condition is satisfied, and to report measurement results in the case that the measurement trigger condition is satisfied, and

the measurement trigger condition is determined based on at least one of a location, distance, or place of the aerial terminal.

13. A method performed by a base station supporting conditional handover in a wireless communication system, the method comprising:

a transceiver configured to transmit and receive signals; and

a controller,

wherein the controller is configured to control to receive measurement results from an aerial terminal, to determine condition information for executing conditional handover based on the measurement results, and to transmit a first radio resource control (RRC) message including the condition information, and

the condition information is determined based on at least one of a location, height, and speed of the aerial terminal.

14. The method of claim 13, wherein the controller is configured to control to receive a second RRC message including a predetermined flight path information related indicator from the aerial terminal, and

the condition is determined based on at least one of a location, height, or speed of the aerial terminal and a signal quality.

15. The method of claim 14, wherein the controller is configured to control to transmit a third RRC message including a measurement trigger condition to the aerial terminal, and

the measurement trigger condition is determined based on at least one of a location, distance, or place of the aerial terminal.

# FIG. 1

EP 4 426 012 A1

# FIG. 2

UE height

205
Aerial UE

way point #1

220
way point #3

Flight path
way point #5

way point #2

way point #4

215
UEInformationResponse
(flightPathInfoReport)

225
measConfig
(Event H1/Event H2)

230
Measurement report
(Aerial UE specific reporting of
height, location, speeed)

210

eNB

Event H1 : Aerial UE height becomes higher than absolute threshold
Event H2 : Aerial UE height becomes lower than absolute threshold

EP 4 426 012 A1

# FIG. 3

# FIG. 4

405 — **Aerial UE**

410 — **gNB 1**

415 — **gNB 2**

420 — Aerial UE-specific preamble

425 — RRCSetupRequest or RRCResumeRequest
(new cause value for Aerial UE)

427 — RRCSetup or RRCResume

430 — RRCSetupComplete or RRCResumeComplete
(flightPathInfoAvailable)

435 — UE capabilities

440 — RRCReconfiguration
(measConfig)

445 — MeasurementReport
(Aerial UE-specific results, e.g. height)

450 — UEInformationRequest
(flightPathInfoReq)

455 — UEInformationResponse
(FlightPathInfoReport)

460 — HandoverPreparationInformation
(CHO + Indicator of aerial UE)

465 — HandoverCommand
(gNB2 location)

470 — building at least one of conditions
1) UE location
2) UE height range
3) UE speed range
4) Distance between Aerial UE and gNBs
5) Combination of the conditions, e.g.
Combination of above new conditions,
Multiple sets of legacy condition(s)
depending on above new conditions

475 — RRCReconfiguration
(ConditionalReconfiguration)

490 480 — evaluating if configured CHO condition(s)
has met

T304
starts

485 — executing HO

493 — If CHO failed but the suitable cell found by Cell Selection is still one of candidates,
performing HO instead of RRC Reestablishment.
The re-execution can be initiated N times

495 — Even if CHO has successfully completed, keeping CHO configuration

# FIG. 5

Aerial UE operation

Transmit aerial UE-specific preamble — 505

Transmit RRCSetupRequest or RRCResumeRequest
including new cause value for Aerial UE — 510

Transmit RRCSetupComplete or RRCResumeComplete
[flightPathInfoAvailable] — 515

Report UE capabilities according to request of
base station — 520

Receive RRCReconfiguration including measConfig — 525

Transmit MeasurementReport including
Aerial UE-specific result [e.g., height] — 530

Receive UEInformationRequest [flightPathInfoReq] — 535

Transmit UEInformationResponse [flightPathInfoReport] — 540

Receive RRCReconfiguration including
ConditionalReconfiguration — 545

Evaluate whether condition(s) of condition-based
handover is(are) satisfied — 550

Execute handover — 555

# FIG. 6

```
┌──────────────────────────────┐
│         gNB operation        │
└──────────────────────────────┘
              │
              ▼
┌──────────────────────────────┐
│  Receive aerial UE-specific preamble  │──605
└──────────────────────────────┘
              │
              ▼
┌──────────────────────────────┐
│  Receive RRCSetupRequest or RRCResumeRequest  │──610
│  including new cause value for Aerial UE       │
└──────────────────────────────┘
              │
              ▼
┌──────────────────────────────┐
│  Receive RRCSetupComplete or RRCResumeComplete  │──615
│  [flightPathInfoAvailable]                      │
└──────────────────────────────┘
              │
              ▼
┌──────────────────────────────┐
│      Receive UE capabilities       │──620
└──────────────────────────────┘
              │
              ▼
┌──────────────────────────────┐
│  Transmit RRCReconfiguration including measConfig  │──625
└──────────────────────────────┘
              │
              ▼
┌──────────────────────────────┐
│  Receive MeasurementReport including  │──630
│  Aerial UE-specific result [e.g., height]  │
└──────────────────────────────┘
              │
              ▼
┌──────────────────────────────┐
│  Transmit UEInformationRequest [flightPathInfoReq]  │──635
└──────────────────────────────┘
              │
              ▼
┌──────────────────────────────┐
│  Receive UEInformationResponse [flightPathInfoReport]  │──640
└──────────────────────────────┘
              │
              ▼
┌──────────────────────────────┐
│  Transmit HandoverPreparationInformation including  │──645
│  conditional handover indicator for aerial UE to target  │
│  candidate cell(s)                                  │
└──────────────────────────────┘
              │
              ▼
┌──────────────────────────────┐
│  Receive HandoverCommand from target candidate cell(s)  │──650
└──────────────────────────────┘
              │
              ▼
┌──────────────────────────────┐
│  Transmit RRCReconfiguration message including  │──655
│  ConditionalReconfiguration                      │
└──────────────────────────────┘
```

# FIG. 7

# FIG. 8

Aerial UE operation

Report UE capabilities according to request of base station ~805

Receive RRCReconfiguration including new event-triggered measurement configuration information ~810

Determine whether configured event(s) is(are) satisfied ~815

Trigger measurement reporting when configured event(s) is(are) satisfied ~820

Report MeasurementReport including Aerial UE-specific result [e.g., height] ~825

# FIG. 9

905

910 Aerial UE 915

NAS | AS

920

gNB

925 ——— MIB
(whether to support Aerial UE,
whether to bar Aerial UE)

935 ——— SIBl
(whether to support Aerial UE,
Barring configuration for Aerial UE)

940 — Forwarding the indicator(s)

Initiating access
attempt for Aerial UE  ○— 945

Mapping the Aerial UE
access into the
corresponding Access  ○— 950
Identity and/or
Access Category  Providing the Access Identity and/or
Access Category

955

960 — ○ Performing barring check

965 — Establishment or Resume procedure

Informing that the access
970 — attempt was barred

# FIG. 10

```
┌─────────────────────────────────────────┐
│           UE NAS operation               │
└─────────────────────────────────────────┘
                    │
                    ▼
┌─────────────────────────────────────────┐
│ Receive information related to aerial UE │ ~1005
│           from aerial UE AS              │
└─────────────────────────────────────────┘
                    │
                    ▼
┌─────────────────────────────────────────┐
│    Initiating access attempt for         │ ~1010
│              Aerial UE                    │
└─────────────────────────────────────────┘
                    │
                    ▼
┌─────────────────────────────────────────┐
│ Map aerial UE access to corresponding    │ ~1015
│   access identity and/or access category │
└─────────────────────────────────────────┘
                    │
                    ▼
┌─────────────────────────────────────────┐
│ Provide access identity and/or           │ ~1020
│        access category                   │
└─────────────────────────────────────────┘
```

# FIG. 11

UE AS operation

Receive MIB including indicator indicating whether aerial UE is supported and indicator(s) indicating whether aerial UE is barred ~1105

Receive SIB including indicator indicating whether aerial UE is supported and aerial UE barring configuration information ~1110

Forward identifier(s) to aerial UE NAS ~1115

Receive access identity and/or access category from UE NAS ~1120

Perform barring check ~1125

Perform establishment or resume process in case that transmission for access is allowed ~1130

FIG. 12

FIG. 13

EP 4 426 012 A1

## INTERNATIONAL SEARCH REPORT

| International application No. |
|---|
| **PCT/KR2022/020247** |

**A. CLASSIFICATION OF SUBJECT MATTER**

**H04W 36/00**(2009.01)i; **H04W 24/10**(2009.01)i; **H04W 84/06**(2009.01)i

According to International Patent Classification (IPC) or to both national classification and IPC

**B. FIELDS SEARCHED**

Minimum documentation searched (classification system followed by classification symbols)

H04W 36/00(2009.01); H04W 24/10(2009.01); H04W 36/30(2009.01); H04W 76/15(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: aerial UE, conditional handover(CHO), RRC, condition, location, height, speed, quality, path, trigger, measurement, report

**C. DOCUMENTS CONSIDERED TO BE RELEVANT**

| Category* | Citation of document, with indication, where appropriate, of the relevant passages | Relevant to claim No. |
|---|---|---|
| Y | WO 2021-015560 A1 (LG ELECTRONICS INC.) 28 January 2021 (2021-01-28) See paragraphs [0065]-[0237]; and figure 15. | 1,5,9,13 |
| A | | 2-4,6-8,10-12,14-15 |
| Y | LENOVO et al. Discussion on UAV support in NR system. RP-212056, 3GPP TSG RAN Meeting #93, Electronic Meeting. 06 September 2021. See section 2. | 1,5,9,13 |
| A | US 2019-0306768 A1 (LG ELECTRONICS INC.) 03 October 2019 (2019-10-03) See paragraphs [0246]-[0538]; and figures 5-13. | 1-15 |
| A | US 2021-0321311 A1 (SONY GROUP CORPORATION) 14 October 2021 (2021-10-14) See paragraphs [0099]-[0167]; and figures 7A-11. | 1-15 |
| A | SONY. Potential handover enhancements for aerial UE. R2-1803138, 3GPP TSG-RAN WG2 Meeting #101. Athens, Greece. 15 February 2018. See section 2. | 1-15 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 March 2023** | **22 March 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2022/020247**

| Patent document cited in search report | | | Publication date (day/month/year) | Patent family member(s) | | | Publication date (day/month/year) |
|---|---|---|---|---|---|---|---|
| WO | 2021-015560 | A1 | 28 January 2021 | US | 2022-0248281 | A1 | 04 August 2022 |
| US | 2019-0306768 | A1 | 03 October 2019 | US | 11129067 | B2 | 21 September 2021 |
| | | | | WO | 2018-009011 | A1 | 11 January 2018 |
| US | 2021-0321311 | A1 | 14 October 2021 | CN | 109547971 | A | 29 March 2019 |
| | | | | CN | 110870334 | A | 06 March 2020 |
| | | | | EP | 3687199 | A1 | 29 July 2020 |
| | | | | EP | 3687199 | A4 | 25 November 2020 |
| | | | | US | 11076328 | B2 | 27 July 2021 |
| | | | | US | 2021-0160749 | A1 | 27 May 2021 |
| | | | | WO | 2019-056982 | A1 | 28 March 2019 |

Form PCT/ISA/210 (patent family annex) (July 2022)